# EUROPÄISCHE PATENTSCHRIFT

(11) **EP 3 497 343 B1**
(45) Veröffentlichungstag und Bekanntmachung des Hinweises auf die Patenterteilung: **19.05.2021**
(21) Anmeldenummer: 17751726.5
(22) Anmeldetag: 10.08.2017
(51) Int. Cl.: F16C 3/03, B62D 1/20, B62D 1/16, F16D 3/06

(54) **LENKWELLE FÜR EIN KRAFTFAHRZEUG**
STEERING SHAFT FOR A MOTOR VEHICLE
ARBRE DE DIRECTION D'UN VÉHICULE AUTOMOBILE

(30) Priorität: 11.08.2016 DE 102016114970
(43) Veröffentlichungstag der Anmeldung: 19.06.2019
(73) Patentinhaber: thyssenkrupp Presta AG, 9492 Eschen (LI); thyssenkrupp AG, 45143 Essen (DE)
(72) Erfinder: BREUER, Marius, 48307 Rochester Hills, Michigan (US); DUROT,Janick, 9443 Widnau (CH); JÄGER, Bernhard, 88239 Wangen im Allgäu (DE); FREI, Daniel, 6923 Lauterach (AT); MEYER, Jan, 6971 Hard (AT)
(74) Vertreter: thyssenkrupp Intellectual Property GmbH
(86) Internationale Anmeldenummer: PCT/EP2017/070272
(87) Internationale Veröffentlichungsnummer: WO 2018/029289

(56) Entgegenhaltungen:
- WO-A1-2012/066904
- CN-U- 203 996 397
- US-A1- 2014 041 194
- US-A1- 2015 251 399

## Beschreibung

Die Erfindung betrifft eine Lenkwelle für ein Kraftfahrzeug, mit einer Innenwelle, die in einer Außenwelle axial in Richtung einer Drehachse verschiebbar angeordnet ist, wobei die Innenwelle auf ihrer Außenseite axial verlaufende radiale Vorsprünge aufweist und die Außenwelle auf ihrer Innenseite axial verlaufende Nuten aufweist, in die die Vorsprünge der Innenwelle in Drehrichtung formschlüssig und in axialer Richtung verschiebbar eingreifen, wobei auf der Innenwelle eine Profilhülse angeordnet ist, deren innere Umfangsfläche an den Flanken der Vorsprünge der Innenwelle und deren äussere Umfangsfläche an den Flanken der Nuten der Außenwelle anliegt, und dass die Profilhülse über einen oder mehrere über den Umfang der Profilhülse verteilte Befestigungspunkte mit der Innenwelle verbunden ist.

Eine solche zweiteilige teleskopierbare Lenkwelle ist beispielsweise aus der JP 2013-142437 A bekannt. Auf einer Innenwelle ist eine Beschichtung angebracht, die die radialen Vorsprünge umschließt und deren Außenseite mit den Nuten der Außenwelle in Kontakt ist. Die Beschichtung dient zur Verringerung der Gleitreibung. Zur Verbesserung der Verbindung zwischen der Beschichtung und der Innenwelle weist die Innenwelle oberflächliche Unebenheiten auf, die beim Herstellungsprozess entstehen oder nachträglich durch Kugelstrahlen oder Ätzen der Oberfläche erzeugt werden. Im Fahrzeugbetrieb treten an der Lenkwelle Temperaturschwankungen auf, welche dazu führen, dass sich die Beschichtung zwischen der Innenwelle und der Außenwelle ausdehnt und dabei die beiden Wellen verklemmen oder sich die Beschichtung derart zusammenzieht, dass zwischen beiden Wellen ein erhöhtes Spiel auftritt. Beides ist unerwünscht.

Aus der WO 2012/066904 A1 ist eine Lenkwelle bekannt, bei der eine Profilhülse auf der Innenwelle verklebt ist, oder reibschlüssig gehalten ist. Durch die Verklebung entsteht ein hoher Aufwand, und bei Temperaturschwankungen kann Verklemmen auftreten. Eine rein reibschlüssige Fixierung ist unzureichend.

Aufgabe der Erfindung ist es, eine Lenkwelle für ein Kraftfahrzeug anzugeben, bei der Temperaturschwankungen keine nachteiligen Auswirkungen auf das Zusammenwirken der beiden Wellen haben.

Die Erfindung löst diese Aufgabe dadurch, dass auf der Innenwelle eine Profilhülse, vorzugsweise mit gewelltem Querschnittsprofil oder mit einem von einer Kreisform abweichenden Profil, angeordnet ist, deren innere Umfangsfläche an den Flanken der Vorsprünge der Innenwelle und deren äussere Umfangsfläche an den Flanken der Nuten der Außenwelle anliegt, und dass die Profilhülse über einen oder mehrere auf einem Kreis über den Umfang der Profilhülse verteilte Befestigungspunkte mit der Innenwelle verbunden ist, wobei erfindungsgemäß vorgesehen ist, dass die Befestigungspunkte mittels Ultraschall- Sonotrode eingebracht sind, wobei die Vorsprünge der Innenwelle auf ihrer radialen Außenseite mit einer Rändelung versehen sind.

Erfindungsgemäß sind die Befestigungspunkte mittels Ultraschall-Sonotrode eingebracht. Diese Befestigungsmaßnahme führt zu einer besonders innigen Verbindung des Materials der Profilhülse mit dem der Innenwelle. Zudem eignet sich der Einsatz einer Ultraschall-Sonotrode besonders gut für die feste Verbindung zwischen den Materialien Kunststoff einerseits und Metall andererseits.

Die Erfindung wird noch verbessert durch die Maßnahme, dass die Vorsprünge der Innenwelle auf ihrer radialen Außenseite mit einer Rändelung versehen sind. Vorzugsweise kann die Rändelung als eine Kreuzrändelung und/oder als Gerad-und/oder Quer- und/oder Schrägrändelung ausgebildet sein, um die Verbindung zwischen Profilhülse und Innenwelle zu verbessern , so dass innerhalb der Lebensdauer der Lenkwelle Fehlfunktionen entgegengewirkt werden kann. In bevorzugter Weise ist die Wandung der Innenwelle mit einer Rändelung versehen.

Die erfindungsgemäße Lösung hat den Vorteil, dass die Profilhülse einerseits axial unverrückbar auf der Innenwelle befestigt ist, sich andererseits aber bei Temperaturschwankungen in Axialrichtung ausdehnen und zusammenziehen kann, ohne dass die Innenwelle in der Außenwelle klemmt oder ein nicht mehr tolerables Spiel auftritt. Die radialen Vorsprünge oder Erhöhungen der Innenwelle können in regelmässigen Abständen an der äusseren Umfangsfläche verteilt sein. Dadurch werden erhabene Abschnitte mit grösserem Radius bezogen auf eine Drehachse und quasi vertiefte Abschnitte mit kleinerem Radius bezogen auf die Drehachse gebildet. Die erhabenen und vertieften Abschnitte wechseln sich ab, sodass eine Verzahnung gebildet wird. Diese Verzahnung kann vorzugsweise als Bogenverzahnung ausgebildet sein, welche äquidistant ist oder mit einer Umfangskontur versehen ist, wie beispielsweise als Dreieck, Viereck, Sechseck oder als Achteck. Durch die Verbindung der Profilhülse mit der Innenwelle an den Befestigungspunkten kann eine komplementäre Verbindung zwischen Innenwelle und Profilhülse bereitgestellt werden.

Mehrere Befestigungspunkte bewirken eine sichere Befestigung der Profilhülse. Vorzugsweise sind die Befestigungspunkte zwischen der Profilhülse und der Innenwelle im Bereich einer Wandung der radialen Vorsprünge vorgesehen. Die Befestigungspunkte können in axialer Richtung der Profilhülse über zwei oder mehr Befestigungspunkte an der Innenwelle befestigt werden. Bevorzugt hat die Profilhülse in axialer Richtung drei oder vier oder fünf oder sechs Befestigungspunkte. Die Befestigungspunkte können in axialer Richtung entlang der gesamten Länge der Befestigungshülse vorgesehen sein. Besonders bevorzugt sind die Befestigungspunkte zwischen Profilhülse und Innenwelle in radialer Richtung in regelmäßigen Abständen angeordnet. Bevorzugt sind in radialer Richtung zwischen zwei und sechs Befestigungspunkten vorgesehen.

Es ist denkbar und möglich dass die Profilhülse und die Außenwelle über Befestigungspunkte miteinander verbunden sind.

Da die Befestigungspunkte in einem sehr engen radialen Bereich auf einem Kreis über den Umfang der Profilhülse verteilt angeordnet sind, wird die temperaturbedingte Ausdehnung oder Schrumpfung der Profilhülse nicht behindert. Daher können Aufwölbungen oder Verwerfungen zwischen der Profilhülse und der Innen-und Außenwelle reduziert werden.

Weiterhin ist es denkbar und möglich, dass die Vorsprünge der Innenwelle auf ihrer radialen Aussenseite oder die Wandung der Innenwelle mit einer Vertiefung versehen sind. Dadurch kann die Profilhülse in die Vertiefungen der Innenwelle eingedrückt werden.

In einer bevorzugten Ausgestaltungsform der Erfindung besteht die Profilhülse aus Kunststoff. Dieses Material gewährleistet einerseits ein leichtes Gleiten in der Außenwelle und andererseits die eine Reduktion des Spiels bei der Übertragung des Lenkmoments.

Ein Ausführungsbeispiel der Erfindung wird nachfolgend anhand der Zeichnungen näher erläutert. Die Figuren zeigen im Einzelnen:
- Figur 1:: eine schematische perspektivische Darstellung eines Lenksystems für ein Kraftfahrzeug;
- Figur 2:: eine erfindungsgemässe zweiteilige teleskopierbare Lenkwelle in perspektivischer Ansicht;
- Figur 3:: eine erfindungsgemäße Lenkwelle, bestehend aus Außenwelle und mit einer Profilhülse versehenen Innenwelle in perspektivischer Ansicht;
- Figur 4:: die Lenkwelle gemäss Figur 3 vor der Montage der Profilhülse;
- Figur 5:: einen Querschnitt einer erfindungsgemäßen Lenkwelle;
- Figur 6:: einen Querschnitt einer Innenwelle während der Befestigung der Profilhülse;
- Figur 7:: ein vergrößertes Detail einer Innenwelle mit Kreuzrändelung; sowie
- Figur 8:: ein vergrößertes Detail einer Innenwelle mit Kreuzrändelung gemäss Figur 7.

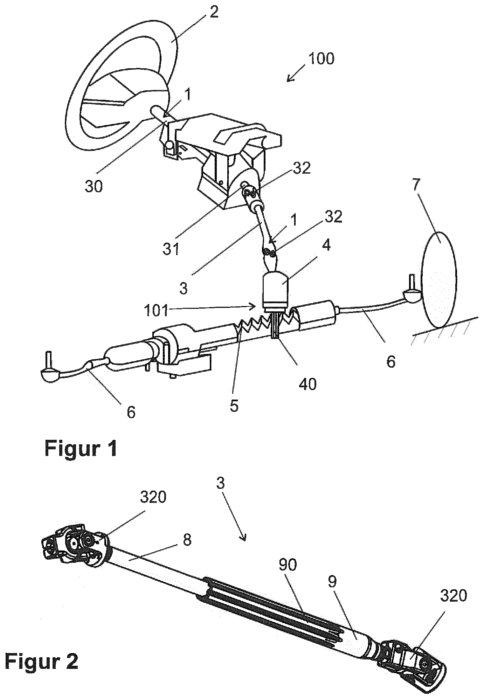

In Figur 1 ist eine Kraftfahrzeuglenkung 100 dargestellt, wobei ein Fahrer über ein Lenkrad 2 ein Lenkmoment als Lenkbefehl in eine Lenkwelle 1 einträgt. Das Lenkmoment wird über die Lenkwelle 1 auf ein Lenkritzel 40 übertragen, welches mit einer Zahnstange 5 kämmt. Die Zahnstange 5 überträgt eine Verschiebung der Spurstangen 6 auf die lenkbaren Fahrzeugräder 7. Die Lenkwelle 1 weist eingangsseitig eine mit dem Lenkrad 2 verbundene Eingangswelle 30 und ausgangsseitig eine mit der Zahnstange 5 über das Lenkritzel 40 verbundene Ausgangswelle 31 auf. Die Eingangswelle 30 und die Ausgangswelle 31 sind drehelastisch über einen in der Figur 1 nicht dargestellten Drehstab miteinander verbunden. Ein vom Fahrer über das Lenkrad 2 in die Eingangswelle 30 eingeleitetes Drehmoment führt zu einer Relativdrehung der Eingangswelle 30 bezüglich der Ausgangswelle 31. Diese Relativdrehung zwischen Eingangswelle 30 und Ausgangswelle 31 kann über einen Drehwinkelsensor ermittelt werden.

Die Lenkwelle 1 gemäß Figur 1 umfasst weiterhin ein oder mehrere kardanische Gelenke 32, mittels welcher der Verlauf der Lenkwelle 1 im Kraftfahrzeug an die räumlichen Gegebenheiten angepasst werden kann. Die Lenkzwischenwelle der Lenkwelle 1, die in dem dargestellten Beispiel zwischen zwei kardanischen Gelenken 32 angeordnet ist, und die Ausgangswelle 31 mit dem Lenkritzel 40 des Lenkgetriebes 101 verbindet, ist erfindungsgemäss als längenveränderbare Lenkwelle 2 ausgebildet.

Figur 2 zeigt eine perspektivische Ansicht der Lenkwelle 2 in montiertem Zustand.

Die Lenkwelle 3 umfasst eine Innenwelle 8, die teleskopisch verschiebbar in einer Außenwelle 9 angeordnet ist. An ihrem gelenkseitigen Ende weisen die Innenwelle 8 und die Aussenwelle 9 jeweils eine Gelenkgabel 320 auf. Hierdurch wird eine Längsverstellung des Lenkrads 2 auch bei der Montage und im Fahrbetrieb ermöglicht.

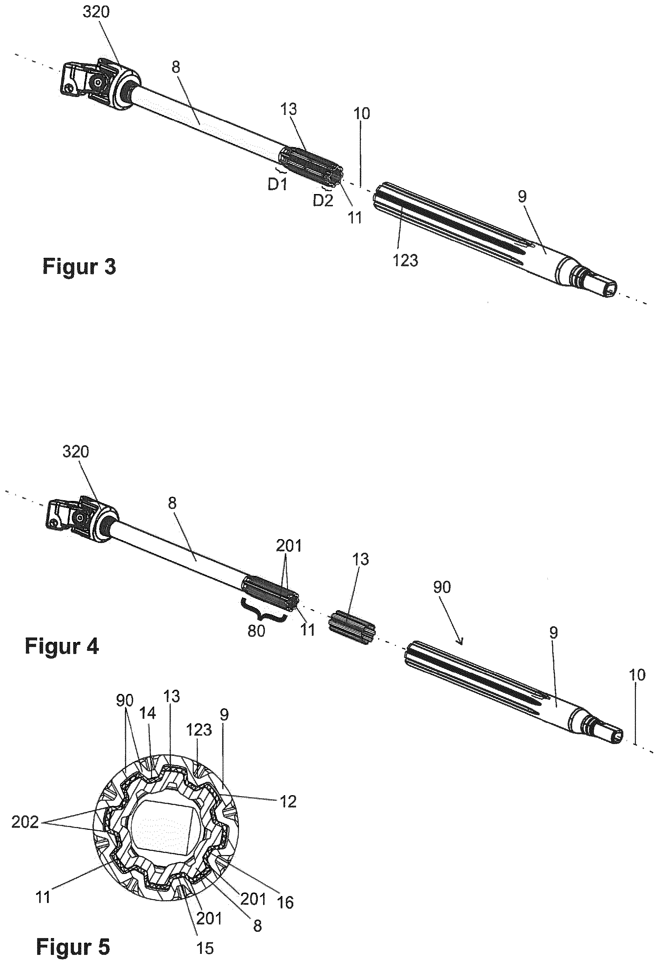

Die Innenwelle 8 ist, wie in den Figuren 3 bis 5 dargestellt, auf ihrem zweiten Ende in einem definierten Bereich 80 auf ihrer äusseren Umfangsfläche mit axial verlaufenden radialen Vorsprüngen 11 versehen, welche als ein äquidistales Bogenprofil ausgebildet sind. Der definierte Bereich 80 kann entlang der gesamten Länge der Innenwelle 8 ausgebildet werden.

Die Außenwelle 9 ist als Hohlwelle ausgebildet und ist auf ihrer inneren Umfangsfläche mit axial verlaufenden Nuten 12 versehen, in welche die Vorsprünge 11 der Innenwelle 8 eingreifen, wobei die Innenwelle 8 mit der Außenwelle 9 in Drehrichtung formschlüssig verbunden ist und die vom Fahrer mittels des Lenkrads 2 vorgegebenen Drehmomente übertragen kann. Die Aussenwelle hat in dem gezeigten Beispiel auch an ihrer äusseren Umfangsfläche axial verlaufende Nuten 123, welche in regelmässigen Abständen als äquidistales Bogenprofil 90 angeordnet sind. Das Bogenprofil 90 der Aussenwelle 9 kann entsprechend dem Bogenprofil der Innenwelle 8 entlang der gesamten Länge der Aussenwelle 9 ausgebildet sein oder nur in einem definierten Bereich 80. Auf der Innenwelle 8 entlang des definierten Bereichs 80 ist eine Profilhülse 13 befestigt. Die Profilhülse 13 kann kleiner oder gleich lang wie der definierte Bereich 80 ausgebildet sein. Die Profilhülse 13 hat ein gewelltes Querschnittsprofil, welches sich an die radialen Vorsprünge 11 anschmiegt, so dass die innere Umfangsfläche der Profilhülse 13 zumindest mit den Flanken 201 der radialen Vorsprünge 11 oder mit den radialen Vorsprüngen 11 der Innenwelle 8 formschlüssig verbunden. Die innere Umgangsfläche der Profilhülse 13 ist nach der Verbindung mit der Innenwelle 8 fest mit dieser verbunden. Das Aussenprofil der Profilhülse 13 ist korrespondierend zu den Nuten 12 auf der Innenumfangsfläche der Aussenwelle 9 ausgebildet.

Im montierten Zustand der Lenkwelle 3 liegt auch die äussere Umfangsfläche der Profilhülse 13 an den Nuten 12 und Flanken 202 der Nuten 12 der Außenwelle 9 an und bildet damit eine formschlüssige Verbindung zwischen Innenwelle 11, Profilhülse 13 und Aussenwelle 9, wodurch eine Teleskopierbewegung der Innenwelle 8 gegenüber der Aussenwelle 9 entlang einer Drehachse 10 ermöglicht wird. Dadurch können weiterhin Drehmomente zwischen der Innenwelle 8 und der Außenwelle 9 übertragen werden. Die Profilhülse 13, die Innenwelle 8 und Aussenwelle 9 sind im Beispiel als Bogenprofil mit einem Achtkantprofil ausgebildet. Diese kann weiterhin als Dreikant- oder Vierkant- oder Kleeblattprofil oder Sechskantprofil ausgebildet sein.Die Profilhülse 13 wird zunächst auf das zweite Ende geschoben und axial in Richtung des gelenkseitigen Endes entlang des definierten Bereichs 80 an den Wandungen 201 der Vorsprünge 11 oder an den Vorsprüngen 11 positioniert. Dabei kann die Hülse 13 mittig auf dem definierten Bereich 80 der Innenwelle 8 angeordnet sein, so dass auf beiden Seiten ein gleich langer Abstand D1, D2 bis zum Ende des definierten Bereichs 80 vorgesehen ist. Der Abstand D1 kann kleiner oder grösser sein als der Abstand D2. Alternativ kann die Profilhülse 13 in Richtung des gelenkseitigen Endes einen Abstand D1 aufweisen oder einen Abstand D2 in Richtung der Aussenwelle 9.Um ein verbessertes Ausdehnen oder Zusammenziehen der Profilhülse 13 bei Temperaturschwankungen zu ermöglichen, ist die Profilhülse 13 nur punktuell im definierten Bereich 80 mit der Innenwelle 8 verbunden. Die Verbindung kann durch einen einzigen Befestigungspunkt 14 erfolgen. Zu bevorzugen sind jedoch mehrere Befestigungspunkte 14, 15, 16, die auf einem Kreis über den Umfang der Profilhülse 13 und der Innenwelle 8 verteilt angeordnet sind. Im konkreten Ausführungsbeispiel der Figur 5 sind drei Befestigungspunkte 14, 15, 16 vorgesehen. Durch die Anordnung der Befestigungspunkte 14, 15, 16 auf einem Kreis wird gewährleistet, dass sich alle Befestigungspunkte 14, 15, 16 in demselben axialen Abschnitt der Profilhülse 13 befinden. Hierdurch wird sichergestellt, dass dem Entstehen von Aufwölbungen oder Verwerfungen der Profilhülse 13 entgegengewirkt werden kann, wenn sich diese infolge von Temperaturschwankungen ausdehnt oder zusammenzieht.

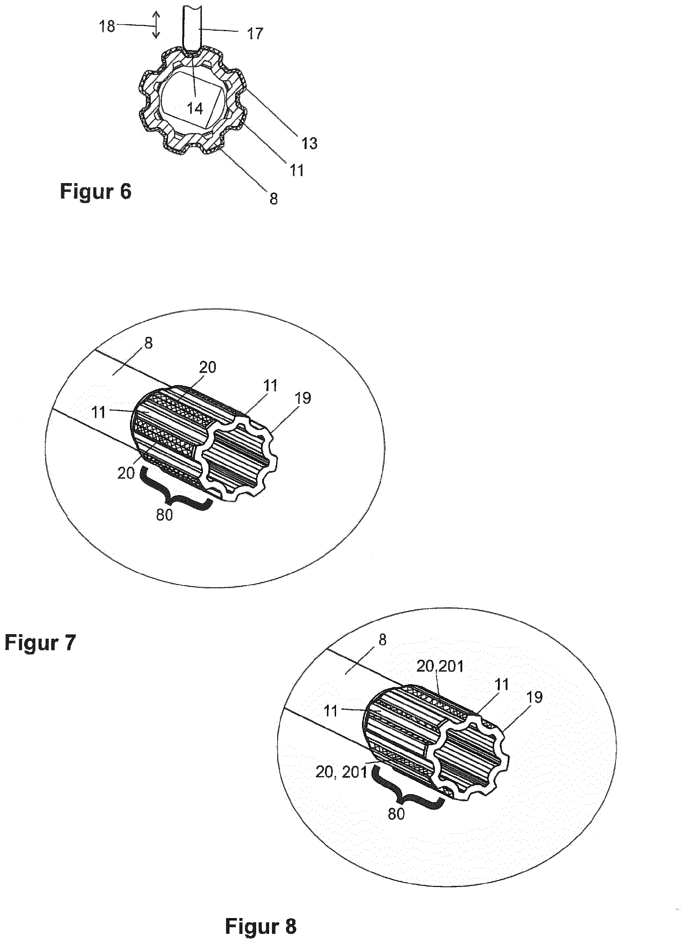

Wie in Figur 6 gezeigt ist, werden die Befestigungspunkte 14, 15, 16 mittels einer Ultraschall-Sonotrode 17 erzeugt, durch welche das Kunststoffmaterial der Profilhülse 13 mit ihrer inneren Umfangsfläche eine innige Verbindung mit der metallischen Oberfläche der Innenwelle 8 eingeht. Die Ultraschall-Sonotrode 17 wird hierfür in Radialrichtung 18 von außen nach innen herangeführt und nach der Erzeugung des jeweiligen Befestigungspunktes 14, 15, 16 wieder entfernt.

Alternativ ist es möglich, dass eine punktuelle Verbindung zwischen der Aussenumfangsfläche der Profilhülse 13 und den Wandungen 202 der Nuten 12 am Innenumfang der Außenwelle 9 vorgesehen ist. Die Profilhülse 13 wird zunächst vollständig in die Aussenwelle 9 geschoben. Wenn die Profilhülse 13 nicht mehr aus der Aussenwelle 9 absteht, wird die Aussenwelle 9 mit der Profilhülse 13 an einem oder mehreren Befestigungspunkten 14, 15, 16 verbunden.

In der vergrößerten Darstellung von Figur 7 und Figur 8 ist dargestellt, dass die radialen Vorsprünge 11 der Innenwelle 8 auf ihrer radial nach außen weisenden Fläche 19 mit einer Kreuzrändelung 20 versehen sind. Die Rändelung 20 ist, wie in Figur 8 dargestellt, auf der Wandung 201 der Innenwelle ausgebildet. Durch die Kreuzrändelung 20 wird die Befestigung der Profilhülse 13 auf der Innenwelle 8 zusätzlich verbessert, so dass über die Lebensdauer der Lenkwelle 3 eine zuverlässige Befestigung gewährleistet bleibt.

### BEZUGSZEICHENLISTE

- 1: Lenksäule
- 2: Lenkrad
- 3: Lenkwelle
- 4: Lenkgetriebe
- 5: Zahnstange
- 6: Spurstangen
- 7: Fahrzeugrad
- 8: Innenwelle
- 9: Außenwelle
- 10: Drehachse
- 11: radiale Vorsprünge
- 12: Nuten
- 13: Profilhülse
- 14: Befestigungspunkt
- 15: Befestigungspunkt
- 16: Befestigungspunkt
- 17: Ultraschall-Sonotrode
- 18: Radialrichtung
- 19: radial äußere Fläche
- 20: Kreuzrändelung

## Patentansprüche

1. Lenkwelle (1) für ein Kraftfahrzeug mit einer Innenwelle (8), die in einer Außenwelle (9) axial in Richtung einer Drehachse (10) verschiebbar angeordnet ist, wobei die Innenwelle (8) auf ihrer Außenseite axial verlaufende radiale Vorsprünge (11) aufweist und die Außenwelle (9) auf ihrer Innenseite axial verlaufende Nuten (12) aufweist, in die die Vorsprünge (11) der Innenwelle (8) in Drehrichtung formschlüssig und in axialer Richtung verschiebbar eingreifen, wobei auf der Innenwelle (8) eine Profilhülse (13) angeordnet ist, deren innere Umfangsfläche an den Flanken der Vorsprünge (11) der Innenwelle (8) und deren äussere Umfangsfläche an den Flanken der Nuten (12) der Außenwelle (9) anliegt, und dass die Profilhülse (13) über einen oder mehrere über den Umfang der Profilhülse (13) verteilte Befestigungspunkte (14, 15, 16) mit der Innenwelle (8) verbunden ist, **dadurch gekennzeichnet, dass** die Befestigungspunkte (14, 15, 16) mittels Ultraschall- Sonotrode (17) eingebracht sind, wobei die Vorsprünge (11) der Innenwelle (8) auf ihrer radialen Außenseite mit einer Rändelung (20) versehen sind.

2. Lenkwelle nach Anspruch 1, **dadurch gekennzeichnet, dass** die Rändelung eine Kreuzrändelung (20) ist.

3. Lenkwelle nach einem der vorhergehenden Ansprüche, **dadurch gekennzeichnet, dass** die Profilhülse (13) aus Kunststoff besteht.

## Claims

1. Steering shaft (1) for a motor vehicle, having an inner shaft (8), which is arranged in an outer shaft (9) so as to be displaceable axially in the direction of an axis of rotation (10), wherein the inner shaft (8) comprises axially running radial projections (11) on its outer side, and the outer shaft (9) comprises axially running grooves (12) on its inner side, into which grooves the projections (11) of the inner shaft (8) engage in a positively locking manner in a direction of rotation and displaceably in an axial direction, wherein, on the inner shaft (8), there is arranged a profiled sleeve (13), the inner circumferential surface of which lies against the flanks of the projections (11) of the inner shaft (8) and the outer circumferential surface of which lies against the flanks of the grooves (12) of the outer shaft (9), and that the profiled sleeve (13) is connected to the inner shaft (8) by means of one or more fastening points (14, 15, 16) distributed over the circumference of the profiled sleeve (13), **characterized in that** the fastening points (14, 15, 16) are formed by means of an ultrasound sonotrode (17), wherein the projections (11) of the inner shaft (8) are equipped with a knurling (20) on their radial outer side.

2. Steering shaft according to Claim 1, **characterized in that** the knurling is a criss-crossed knurling (20).

3. Steering shaft according to either of the preceding claims, **characterized in that** the profiled sleeve (13) is composed of plastic.

## Revendications

1. Arbre de direction (1) pour un véhicule automobile, comprenant un arbre intérieur (8) qui est disposé dans un arbre extérieur (9) de manière déplaçable axialement dans la direction d'un axe de rotation (10), l'arbre intérieur (8) présentant, sur son côté extérieur, des saillies radiales (11) s'étendant axialement et l'arbre extérieur (9) présentant, sur son côté intérieur, des rainures s'étendant axialement (12), dans lesquelles s'engagent, par engagement par correspondance de formes dans la direction de rotation et de manière déplaçable dans la direction axiale, les saillies (11) de l'arbre intérieur (8), une douille profilée (13) étant disposée sur l'arbre intérieur (8), dont la surface périphérique intérieure s'applique contre les flancs des saillies (11) de l'arbre intérieur (8) et dont la surface périphérique extérieure s'applique contre les flancs des rainures (12) de l'arbre extérieur (9), et en ce que la douille profilée (13) est connectée à l'arbre intérieur (8) par le biais d'un ou plusieurs points de fixation (14, 15, 16) répartis sur la périphérie de la douille profilée (13), **caractérisé en ce que** les points de fixation (14, 15, 16) sont réalisés au moyen d'une sonotrode à ultrasons (17), les saillies (11) de l'arbre intérieur (8) étant pourvues, sur leur côté extérieur radial, d'un moletage (20).

2. Arbre de direction selon la revendication 1, **caractérisé en ce que** le moletage est un moletage en croisillons (20).

3. Arbre de direction selon l'une quelconque des revendications précédentes, **caractérisé en ce que** la douille profilée (13) se compose de plastique.
